# EUROPÄISCHE PATENTSCHRIFT

(11) **EP 0 654 404 B1**
(45) Veröffentlichungstag und Bekanntmachung des Hinweises auf die Patenterteilung: **29.12.1997**
(21) Anmeldenummer: 94114418.0
(22) Anmeldetag: 14.09.1994
(51) Int. Cl.: B64G 1/58, B64G 1/64, B64C 1/12

(54) **Befestigung einer thermischen Isolationsstruktur**
Fastening for a thermal insulation structure
Fixation d'une structure d'isolation thermique

(30) Priorität: 24.11.1993 DE 4340002
(43) Veröffentlichungstag der Anmeldung: 24.05.1995
(73) Patentinhaber: Daimler-Benz Aerospace Aktiengesellschaft, 81663 München (DE)
(72) Erfinder: Heinze, Horst, D-83620 Feldkirchen-Westerham (DE); Runge, Axel, D-85521 Ottobrunn (DE)

(56) Entgegenhaltungen:
- DE-C- 3 814 183
- FR-A- 2 609 276
- US-A- 4 344 591
- US-A- 4 439 968
- US-A- 4 919 366

## Beschreibung

Die Erfindung betrifft eine Befestigung einer thermischen Isolationsstruktur an der Zelle eines Flugkörpers gemäß dem Oberbegriff des Patentanspruches 1.

Isolationsstrukturen, welche aus einer Vielzahl von hochhitzebeständigen, mit der Zelle eines Fluggerätes zu verbindenden Panels bestehen, sind beispielsweise vom amerikanischen Space Shuttle-Programm her bekannt. Beim Wiedereintritt in die Atmosphäre werden einzelne Panels oder auch Panelfelder durch thermische und strömungsmechanische Einflüsse so stark beschädigt, daß sie vor dem nächsten Start ausgewechselt werden müssen. Dieser Austausch ist, bedingt durch die bisher verwendeten Befestigungsarten, z.B. Kleben, sehr zeit- und kostenintensiv. Abgesehen von dem Kriterium der Austauschbarkeit/Reparaturfähigkeit ist zu beachten, daß die Befestigung der Panels an der Zelle extrem widerstandsfähig und zuverlässig sein muß, um den hohen strömungsmechanischen Belastungen in gewissen Flugphasen standzuhalten. Andererseits soll sie thermisch bedingte Ausdehnungs- und Kontraktionsbewegungen der Panels zulassen, ohne dabei unerwünschte Kräfte und Spannungen zu erzeugen. Weiterhin wird angestrebt, daß die Befestigungslelemente vor hohen thermischen Belastungen bestmöglich geschützt werden.

Aus der US-PS 4 344 591 ist eine formschlüssige Steckbefestigung bekannt, welche jedes Panel mit dem nächsten Panel und mit der Zelle des Flugkörpers verbindet. Zu diesem Zweck weist jedes Panel stirnseitig zwei vorstehende Zungen auf, welche in Laschen an der Zelle sowie in Ausnehmungen des nächsten Panel eingreifen. So lassen sich beispielsweise in Umfangsrichtung des Flugkörperrumpfes Panelreihen erzeugen, wobei das erste bzw. das letzte Panel einseitig einer gesonderten Befestigung bedarf. Dabei ist vorteilhaft, daß sich die Befestigungselemente, mit Ausnahme der einen Endbefestigung, im thermisch geschützten Bereich unterhalb der Isolation befinden. Es ist jedoch offensichtlich, daß sich hier keine einzelnen Panels austauschen lassen, sondern nur Panelreihen bzw. zusammenhängende Teilbereiche von Panelreihen. Weiterhin ist eine spielfreie Befestigung der Panels ohne Behinderung ihrer thermischen Längenänderungen auf diese Weise praktisch nicht möglich.

Aus der EP-OS 0 214 893 ist eine thermische Isolationsstruktur für Luft- und Raumfahrzeuge bekannt, welche aus in Abstand zur Zellenoberfläche befestigten, biege- und torsionsweichen, hitzefesten Blechstreifen sowie aus darunter angeordnetem, ggf. separat an der Zelle befestigtem Isolationsmaterial besteht. Diese Struktur hat den Nachteil, daß sie aufgrund ihrer dünnen, metallischen Oberfläche nicht für extrem hohe Temperaturbelastungen verwendbar ist. Weiterhin reichen die Befestigungselemente, d.h. die Schrauben, Stützstege etc., bis in den heißen Oberflächenbereich, was zwar die Reparaturfähigkeit verbessert aber die Sicherheit und Zuverlässigkeit sehr nachteilig beeinflußt.

Angesichts der Nachteile dieser bekannten Lösungen besteht die Aufgabe der Erfindung darin, eine formschlüssige Befestigung für eine aus einer Vielzahl von hochhltzebeständigen, stabilen Panels bestehende Isolationsstruktur zu schaffen, welche besonders sicher und zuverlässig sowie konstruktiv einfach ist, welche keine bzw. nur unwesentliche Zwangskräfte auf die Panels ausübt und dabei eine im wesentlichen spielfreie Verbindung schafft und welche besonders montage- und reparaturfreundlich ist, wobei auch einzelne Panels im Verbund ausgetauscht werden können.

Diese Aufgabe wird durch die im Anspruch 1 gekennzeichneten Merkmale gelöst.

Die Erfindung schafft eine statisch bestimmte oder statisch nur wenig überbestimmte Verbindung zwischen den Panels und der Zelle, welche keine oder nur vernachlässigbar kleine Zwangskräfte erzeugt und die Panels in definierter Lage fixiert. Dafür sind je Panel mindestens drei Befestigungspunkte vorgesehen, wovon der erste in seinem Bereich keine Bewegung des Panels oder eine zumindest begrenzte Drehbewegung, der zweite Befestigungspunkt örtlich eine begrenzte lineare Verschiebung, der dritte und jeder weitere Befestigungspunkt örtlich eine begrenzte allseitige Verschiebung des Panels ermöglichen. Das Zusamenwirken dieser Punkte ergibt die gewünschte, eindeutige Lagefixierung jedes Panels. Der erste Befestigungspunkt ist als selbstverriegelnde und von der Panelaußenseite her lösbare Steck- und Schnappverbindung ausgeführt, alle weiteren Befestigungspunkte als Steckverbindungen. Der erforderliche thermische Dehnspalt zwischen den Panels (Paneloberseite: max. 1000° C / Zellenwandung: max. 200° C) ermöglicht das Lösen der Schnappverbindung mittels Spezialwerkzeug und das Verschieben der Panels. Dieser Spalt wird im Betrieb mit einer zusätzlichen Fugenabdichtung (flexibler Gap Filler) überbrückt.

Die Unteransprüche 2 bis 4 enthalten bevorzugte Ausgestaltungen der Befestigung nach Anspruch 1.

Die Erfindung wird anschließend anhand der Zeichnungen näher erläutert. Dabei zeigen In vereinfachter Darstellung:
- Fig. 1: eine Ansicht eines Befestigungspunktes mit lösbarer Steck- und Schnappverbindung von der Zellenseite her,
- Fig. 2: einen Teilschnitt gemäß dem Verlauf II-II in Fig. 1,
- Fig. 3: eine Ansicht eines Befestigungspunktes mit einer begrenzt linear beweglichen Steckverbindung von der Zellenseite her,
- Fig. 4: eine Ansicht eines Befestigungspunktes mit einer begrenzt allseitig beweglichen Steckverbindung von der Zellenseite her und
- Fig. 5: einen Teilschnitt gemäß dem Verlauf V-V in Fig. 4,
- Fig. 6: eine Teilansicht der strömungsbeaufschlagten Außenfläche eines Panelverbundes,
- Fig. 7: einen Teilschnitt gemäß dem Verlauf VII-VII in Fig. 6 in größerem Maßstab sowie um 45° gedreht.

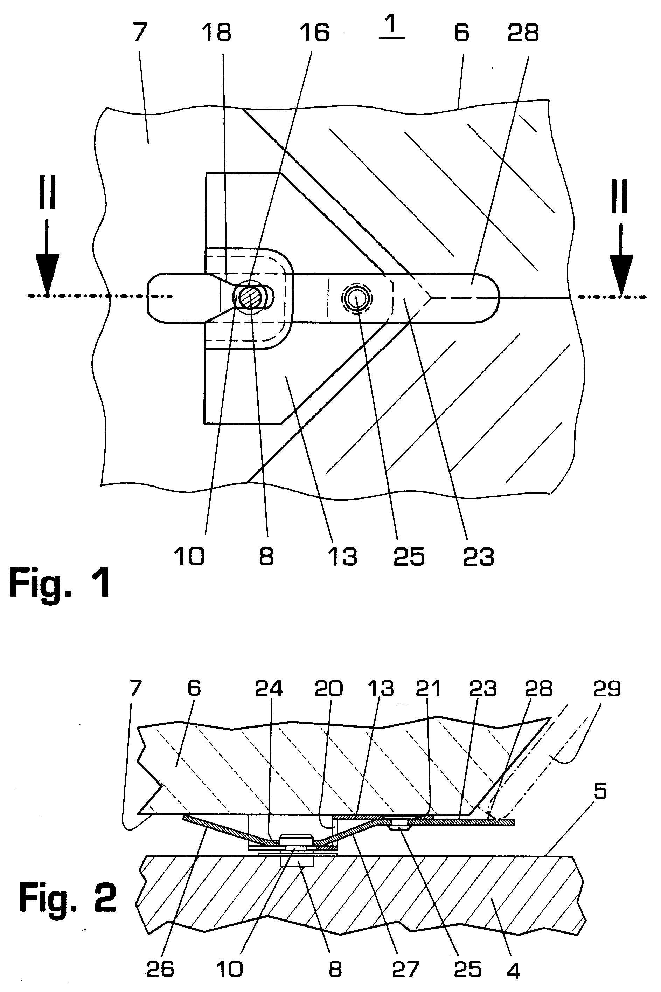

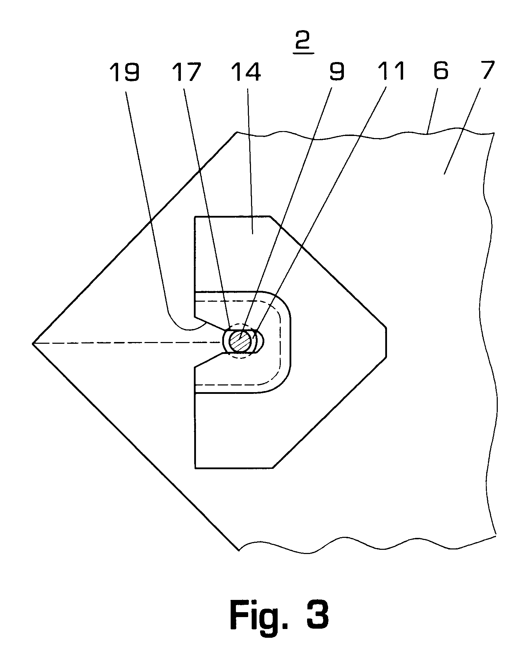

Zum besseren Verständnis der Figuren sei gesagt, daß diese drei Eckbereiche eines quadratischen, ebenen Panels 6 zeigen, dessen vier Stirnflächen bezüglich der Panelober- und -unterseite schräg angeordnet sind. Zwei aneinandergrenzende Stirnflächen stehen in stumpfem Winkel zur Panelunterseite 7 (siehe Fig. 1, 2, 4, 5), die übrigen beiden Stirnflächen in spitzem Winkel zur Panelunterseite 7 (siehe Fig. 3, 4, 5). Unter Berücksichtigung der Strömungsverhältnisse an dem thermisch zu schützenden Flugkörper werden die Panels 6 prinzipiell so ausgerichtet, daß die zwischen den Panelstirnflächen vorhandenen Fugen bzw. Spalte an der umströmten Heißgasseite durch die an zwei Seiten jedes Panels überstehende Deckschicht schindelartig überlappt sind und mit einer Richtungskomponente in Strömungsrichtung, d.h. schräg in Strömungsrichtung, münden. Dadurch wird ein Eindringen von Heißgasen in die Spalte wirksam verhindert.

Dem Fachmann ist klar, daß die Panels - abweichend von der dargestellten, einfachen Geometrie - auch ein- oder zweidimensional gekrümmt und weitgehend beliebig geformt sein können, z.B. auch als wabenartige Sechsecke. Dies ändert aber nichts an der Anwendbarkeit der vorliegenden Erfindung.

Die Fig. 1 und 2 zeigen den Befestigungspunkt 1, welcher den Fixpunkt der gesamten Anordnung bildet, und über welchen das Panel 6 arretiert oder gelöst werden kann. An der Panelunterseite 7 ist hierfür eine Anschlußbrücke 13 befestigt, z.B. mittels Lötung, welche einen einseitig offenen Führungsschlitz 16 mit Einführfase 18 aufweist. Seitens der Zelle 4 ist als Gegenstück hierzu ein Anschlußbolzen 8 vorhanden, dessen Einstich 10 weitgehend spielfrei in den Führungsschlitz 16 paßt. Die lösbare Verriegelung erfolgt durch die Blattfeder 23, welche mit ihrer Bohrung 24 den Anschlußbolzen 8 formschlüssig umgibt und welche über den fest mit ihr verbundenen Nietstift 25 in der Bohrung 21 der Anschlußbrücke 13 fixiert ist. Somit verbleibt als kinematischer Freiheitsgrad nur die Drehbeweglichkeit des Anschlußbolzens 8 in der Bohrung 24 und im Führungsschlitz 16. Das freie Federende 28 reicht bis in den Spaltbereich an der Panelecke (das angrenzende Panel ist nicht dargestellt) und kann zur Entriegelung mittels eines passend geformten Werkzeuges 29 zur Zelle 4 hin heruntergedrückt werden. Die Überlappungsecke der Deckschicht 30 wird zuvor aufgebogen, um die Zugänglichkeit für das Werkzeug 29 zu ermöglichen. Dadurch kommt der Nietstift 25 außer Eingriff, und die Anschlußbrücke 13 mit dem Panel 6 kann verschoben werden, bis der Führungsschlitz 16 vom Anschlußbolzen 8 freikommt. Dann kann das Panel 6 nach oben aus dem Verbund entnommen werden. Umgekehrt erfolgt die Panelmontage mit bereits in die Anschlußbrücke 13 eingerasteter Blattfeder 23. Während der Führungsschlitz 16 der Anschlußbrücke 13 über den Einstich 10 des Anschlußbolzens 8 geschoben wird, drückt der Bolzenkopf den rampenförmigen Abschnitt 26 der Blattfeder 23 elastisch nach oben, bis der Anschlußbolzen 8 mit der Bohrung 24 fluchtet und die Blattfeder 23 herunterschnappt in die Position gemäß Fig. 2. Bei diesen Vorgängen wird der Abschnitt 27 der Blattfeder 23 in einem Paßschlitz 20 der Anschlußbrücke 13 exakt geführt, so daß keine ungewollte Verdrehung der Blattfeder 23 um die Achse des Nietstiftes 25 möglich ist. Zum Entfernen eines ohnehin beschädigten Panels spielt es keine Rolle, wenn die betreffende Panelecke aufgebogen bzw. gezielt abgetrennt wird, ohne jedoch den Befestigungspunkt selbst zu beschädigen.

Fig. 3 zeigt den Befestigungspunkt 2 an der dem Befestigungspunkt 1 diametral gegenüberliegenden Ecke des Panels 6. Die konstruktive Ausführung unterscheidet sich von der zuerst beschriebenen im wesentlichen nur dadurch, daß die Blattfeder als Verriegelungselement fehlt. Die Anschlußbrücke 14 weist hier ebenfalls einen Führungsschlitz 17 mit Einführfase 19 für den Einstich 11 des Anschlußbolzens 9 auf. Durch das Fehlen der Verriegelung ist hier zusätzlich zur Drehung des Anschlußbolzens 8 eine begrenzte lineare Verschiebung in Längsrichtung des Führungsschlitzes möglich. Auf diese Weise werden Zwangskräfte durch unterschiedliche Längenänderungen von Panel 6 und Zelle 4 vermieden.

Betrachtet man die verbindende Paneldiagonale mechanisch als statisch bestimmt gelagerten Balken, so bildet Befestigungspunkt 1 das Festlager, Befestigungspunkt 2 das Loslager des Balkens.

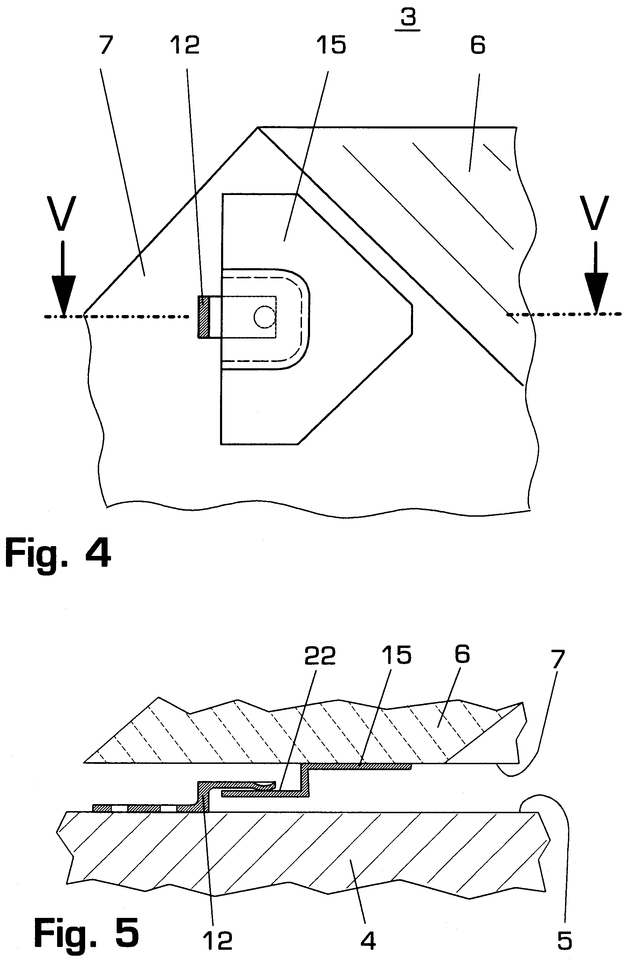

Die Fig. 4 und 5 zeigen einen weiteren Befestigungspunkt 3, welcher je einmal in den beiden verbleibenden Panelecken vorhanden ist. Jeder Befestigungspunkt 3 umfaßt panelseitig eine Anschlußbrücke 15 mit einer vom Panel 6 beabstandeten Gleitfläche 22 sowie zellenseitig eine die Gleitfläche 22 kontaktierende Anschlußklinke 12, deren Kontaktfläche vorzugsweise ballig ausgeführt ist. Somit begrenzt jeder Befestigungspunkt 3 lediglich eine lineare Bewegung des Panels 6 senkrecht von der Zellenoberfläche weg. Alle anderen linearen und rotatorischen Bewegungen des Panels 6 werden nicht behindert. Anders ausgedrückt verhindert jeder Befestigungspunkt 3 eine Kippbewegung des Panels 6 um die die Befestigungspunkte 1 und 2 verbindende Achse in jeweils eine Richtung.

Es ist auch möglich, die beiden Befestigungspunkte 3 durch einen einzigen zu ersetzen, indem man diesen doppeltwirkend ausführt, so daß er sowohl eine Annäherung als auch eine Distanzierung von Panel und Zelle verhindert. Auch dieser Befestigungspunkt sollte einen ausreichend großen Abstand von der Verbindungsachse der Befestigungspunkte 1 und 2 aufweisen.

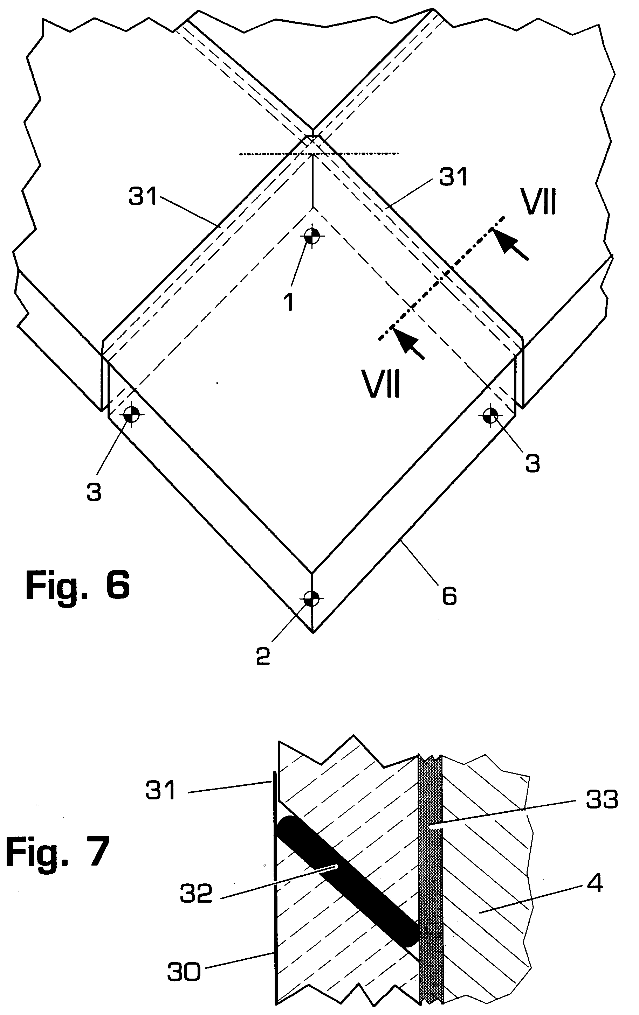

Die Fig. 6 und 7 verdeutlichen das Prinzip des Panelverbundes und der Fugenabdichtung.

Fig. 6 zeigt eine senkrechte Draufsicht (nicht perspektivisch!) auf die strömungsbeaufschlagte Außenfläche des Panelverbundes, wobei vier schräg zur Blickrichtung geneigte Stirnflächen von drei Panels sichtbar dargestellt sind, d.h. ohne die sich nach unten anschließenden, weiteren Panels.

Die Lage der vier verdeckt unterhalb des Panels 6 liegenden Befestigungspunkte ist mit teilgeschwärzten Kreisen sowie mit den Bezugszeichen 1, 2, 3, 3 angedeutet. Es ist zu erkennen, daß die Deckschicht 30 jedes Panels 6 nach links und rechts oben über die jeweilige, schräge Stirnfläche vorsteht, so daß sich eine schindelartige Überlappung über den Dehnfugen ergibt. Dadurch entsteht eine geschlossene, weitgehend glatte Strömungsoberfläche. Oberhalb des Befestigungspunktes 1 ist eine strichpunktierte, horizontale Linie gezeigt. Zum Lösen des Panels wird die oberhalb dieser Linie liegende Ecke der Deckschicht 30 aufgebogen, damit das Werkzeug zum Entriegeln der Befestigung in die Fuge gesteckt werden kann.

Fig. 7 zeigt, daß in der Fuge unterhalb der Überlappung 31 eine elastisch nachgiebige Fugenabdichtung 32 als zusätzliche Strömungssperre angeordnet ist. Zwischen die Zelle 4 und die Panels ist ein elastischer Filz 33 eingelegt, welcher eine definierte Stützkraft von unten auf die Panels ausübt und in Verbindung mit den Befestigungspunkten als Schwingungsdämpfer wirkt.

## Patentansprüche

1. Befestigung einer thermischen Isolationsstruktur an der Zelle eines Flugkörpers, insbesondere eines Raumflugkörpers mit Wiedereintritt in die Atmosphäre, wobei die Isolationsstruktur aus einer Vielzahl von hochhitzebeständigen, mechanisch stabilen, ggf. mit einer zusätzlichen Fugenabdichtung versehenen Panels besteht, mit mehreren voneinander beabstandeten, eine formschlüssige Verbindung zwischen Isolationsstruktur und Zelle herstellenden Befestigungspunkten je Panel, **gekennzeichnet** durch einen ersten Befestigungspunkt (1), welcher keine Bewegung des Panels (6) oder eine zumindest begrenzte Drehbewegung des Panels (6) um eine zur Zellenoberfläche (5) oder zu einer örtlichen Tangentialebene der Zellenoberfläche senkrechte oder annähernd senkrechte Achse zuläßt, durch einen zweiten Befestigungspunkt (2), welcher eine begrenzte, lineare Verschiebung des Panels (6) parallel oder annähernd parallel zur Zellenoberfläche (5) zuläßt, durch mindestens einen weiteren Befestigungspunkt (3), welcher eine begrenzte, allseitige Verschiebung des Panels (6) parallel oder annähernd parallel zur Zellenoberfläche (5) zuläßt, durch eine Ausführung des ersten Befestigungspunktes (1) als selbstverriegelnde, von der heißgasbeaufschlagten Paneloberfläche her lösbare Steck- und Schnappverbindung mit einem Anschlußbolzen (8), mit einem diesen aufnehmenden Anschlußelement (13) und mit einem diese beiden Teile starr oder zumindest begrenzt drehbeweglich verriegelnden Federelement (23) und durch eine Ausführung der weiteren Befestigungspunkte (2,3) als Steckverbindungen, wobei die Steckrichtung für alle Befestigungspunkte gleich ist.

2. Befestigung nach Anspruch 1, **gekennzeichnet** durch eine Ausführung des ersten Befestigungspunktes (1) mit einem zellenfesten, einen Einstich (10) aufweisenden Anschlußbolzen (8), wobei das Anschußelement (13) eine panelfesten Anschlußbrücke (13) ist, welche in Abstand zur Panelunterseite (7) einen Führungsschlitz (16) mit Einführfase (18) für den Einstich (10) des Anschlußbolzens (8) aufweist, wobei Ferner das Federelement (23) eine bezüglich ihres Längsverlaufes mehrfach gebogenen Blattfeder (23) ist, welche eine Bohrung (24) zur Aufnahme des Anschlußbolzens (8) sowie einen von der Bohrung (24) beabstandeten Nietstift (25), zwei von diametralen Seiten rampenförmig geneigt zur Bohrung (24) hin verlaufende Abschnitte (26,27) und ein sich bis in den Fugenbereich der Panels (6) erstreckendes, freies Federende (28) aufweist, und wobei die Anschlußbrücke (13) eine Bohrung (21) zur Aufnahme des Nietstiftes (25) der Blattfeder (23) und einen Paßschlitz (20) zur Durchführung und Verdrehsicherung der Blattfeder (23) aufweist.

3. Befestigung nach Anspruch 1 oder 2, **gekennzeichnet** durch eine Ausführung des zweiten Befestigungspunktes (2) mit einem zellenfesten, einen Einstich (11) aufweisenden Anschlußbolzen (9) und mit einer panelfesten Anschlußbrücke (14), welche in Abstand zur Panelunterseite (7) einen Führungsschlitz (17) mit Einführfase (19) für den Einstich (11) des Anschlußbolzens (9) aufweist, sowie durch eine Ausführung jedes weiteren Befestigungspunktes (3) mit einer zellenfesten Anschlußklinke (12) und mit einer panelfesten Anschlußbrücke (15), welche eine die Anschlußklinke (12) kontaktierende Gleitfläche (22) aufweist.

4. Befestigung nach einem oder mehreren der Ansprüche 1 bis 3,für eine thermische Isolationsstruktur mit viereckigen, insbesondere quadratischen oder rautenförmigen Panels, **gekennzeichnet** durch vier Befestigungspunkte je Panel, durch eine Anordnung des ersten und des zweiten Befestigungspunktes im Bereich zweier diametraler Ecken des Panels, durch eine Anordnung der beiden weiteren Befestigungspunkte im Bereich der verbleibenden diametralen Ecken des Panels, sowie durch eine zu der den ersten und den zweiten Befestigungspunkt verbindenden Paneldlagonale parallele oder annähernd parallele Steckrichtung aller vier Befestigungspunkte.

## Claims

1. Mounting of a thermal insulation structure to the cell of a flying object, in particular a space vehicle with re-entry into the atmosphere, and the insulation structure is composed of a plurality of high heat resistant, mechanically stable panels, if appropriate provided with an additional joint seal, with a plurality of mounting points per panel, which are distanced from each other and form a positive connection between insulation structure and cell, **characterised by** a first mounting point (1), which does not permit any movement of the panel (6) or an at least defined rotary movement of the panel (6) around an axis which is perpendicular or virtually perpendicular to the cell surface (5) or to a local tangential plane of the cell surface, a second mounting point (2) which permits a defined linear displacement of the panel (6) parallel or virtually parallel to the cell surface (5), at least one further mounting point (3) which permits a defined allsided displacement of the panel (6) parallel or virtually parallel to the cell surface (5), an embodiment of the first mounting point (1) as a plug- or snap-connection, which is selflocking and releasable from the panel surface which is loaded by hot gas, with a connecting pin (8), with a connecting element (13) which receives the latter, and with a spring element (23) which locks these two parts rigidly or at least with defined rotary movability, and an embodiment of further mounting points (2, 3) as plug connections, and the plugging direction is the same for all mounting points.

2. Mounting according to Claim 1, **characterised by** an embodiment of the first mounting point (1) with a connecting pin (8) which is attached to the cell and comprises a first insertion point, and the connecting element (13) comprises a connecting bridge (13) which is attached to the panel and which comprises at a distance from the panel bottom (7) a guide slot (16) with insert phase (18) for the insertion point (10) of the connecting pin (8), and furthermore the spring element (23) is a leaf spring (23) which is relative to its longitudinal extent bent several times comprising a bore (24) for receiving the connecting pin (8) as well as a rivet pin (25) which is distanced from the bore (24), two sections (26, 27) which extend from diametral sides with a ramp-like slant toward the bore (24), and a free spring end (28) which extends up into the joint area of the panel (6), and the connecting bridge (13) comprises a bore (21) for receiving the rivet pin (25) of the leaf spring (23) and a matching slot (20) for passing the leaf spring (23) through and securing it from rotating.

3. Mounting according to Claim 1 or 2, **characterised by** an embodiment of the second mounting point (2) with a connecting pin (9) which is attached to the cell and comprises an insertion point (11), and with a connecting bridge (14) which is attached to the panel and which has at a distance from the panel bottom (7) a guide slot (17) with insert phase (19) for insertion (11) of the connecting pin (9), and by arranging each additional mounting point (3) with a connecting latch (12) which is connected to the cell and with a connecting bridge (15) which is attached to the panel and which comprises a glide surface (22) which makes contact with the connecting latch (12).

4. Mounting according to one or more of Claims 1 to 3, for a thermal insulation structure with rectangular, in particular square or rhombic panels, **characterised by** four mounting points per panel, by an arrangement of the first and the second mounting point in the area of two diametral corners of the panel, by an arrangement of the two additional mounting points in the area of the remaining diametral corners of the panel, and by an insert direction of all four mounting points which is parallel or virtually parallel relative to the panel diagonal which connects the first and the second mounting point.

## Revendications

1. Fixation d'une structure d'isolation thermique sur la cellule d'un engin volant, notamment d'un engin spatial devant rentrer dans l'atmosphère, la structure d'isolation étant formée de plusieurs panneaux résistants aux températures élevées, mécaniquement stables, pourvus éventuellement d'une étanchéité supplémentaire au niveau des joints, avec pour chaque panneau plusieurs points de fixation mutuellement espacés qui réalisent une liaison par obstacles entre la structure d'isolation et la cellule, caractérisé par un premier point de fixation (1) qui n'autorise aucun mouvement du panneau (6) ou autorise seulement un mouvement de rotation limité du panneau (6) autour d'un axe perpendiculaire ou sensiblement perpendiculaire à la surface (5) de la cellule ou à un plan local tangentiel de la surface de la cellule, par un deuxième point de fixation (2) qui autorise un déplacement linéaire limité du panneau (6) parallèlement ou sensiblement parallèlement à la surface (5) de la cellule, par au moins un point de fixation (3) supplémentaire qui autorise un déplacement limité du panneau (6), dans toutes les directions, parallèlement ou sensiblement parallèlement à la surface (5) de la cellule, par un agencement du premier point de fixation (1) sous forme de liaison enfichable et encliquetable autoverrouillable, pouvant être annulée depuis la surface du panneau exposée au gaz chaud, avec un axe d'assemblage (8), avec un élément d'assemblage (13) qui reçoit ledit axe d'assemblage et avec un élément élastique (23) qui verrouille ces deux pièces rigidement ou seulement avec une possibilité de rotation limitée, et par un agencement des autres points de fixation (2, 3) sous la forme de liaisons enfichables, la direction d'enfichage étant la même pour tous les points de fixation.

2. Fixation selon la revendication 1, caractérisée par un agencement du premier point de fixation (1) avec un axe d'assemblage (8) solidaire de la cellule, pourvu d'une rainure (10), l'élément d'assemblage (13) étant une patte d'assemblage formant pont (13) solidaire du panneau, qui comporte, à distance de la face inférieure (7) du panneau, une fente de guidage (16) avec chanfrein d'entrée (18) pour la rainure (10) de l'axe d'assemblage (8), l'élément élastique (23) étant un ressort à lame (23) coudé plusieurs fois dans sa longueur, comportant un trou (24) destiné à recevoir l'axe d'assemblage (8), un rivet (25) disposé à distance du trou (24), deux tronçons (26, 27) inclinés en forme de rampe qui s'étendent à partir de deux côtés diamétralement opposés en direction du trou (24) et une extrémités de ressort (28) libre qui s'étend jusque dans la région du joint du panneau (6), la patte d'assemblage formant pont (13) comportant un trou (21) destiné à recevoir le rivet (25) du ressort à lame (23) ainsi qu'une fente (20) pour le passage et le blocage en rotation du ressort à lame (23).

3. Fixation selon la revendication 1 ou 2, caractérisée par un agencement du deuxième point de fixation (2) avec un axe d'assemblage (9) pourvu d'une rainure (11) solidaire de la cellule et une patte d'assemblage formant pont (14) solidaire du panneau, qui comporte, à distance de la face inférieure (7) du panneau, une fente de guidage (17) avec chanfrein d'entrée (19) pour la rainure (11) de l'axe d'assemblage (9), ainsi que par un agencement de chaque autre point de fixation (3) avec une pièce de verrouillage (12) solidaire de la cellule et une patte d'assemblage formant pont (15) solidaire du panneau, qui comporte une surface de glissement (22) en contact avec la pièce de verrouillage (12).

4. Fixation selon selon une ou plusieurs des revendications 1 à 3 pour une structure d'isolation thermique à panneaux quadrangulaires, notamment à panneaux en forme de carrés ou de losanges, caractérisée par quatre points de fixation par panneau, par une disposition du premier et du deuxième point de fixation dans la région de deux angles diamétralement opposés du panneau, par une disposition des deux autres points de fixation dans la région des deux angles diamétralement opposés restants du panneau ainsi que par une direction d'enfichage pour les quatre points de fixation parallèle ou sensiblement parallèle à la diagonale du panneau passant par les premier et deuxième points de fixation.
